# EUROPEAN PATENT APPLICATION

(11) **EP 2 874 062 A1**
(43) Date of publication of application: **20.05.2015**
(21) Application number: 13306558.1
(22) Date of filing: 14.11.2013
(51) Int. Cl.: G06F 9/50, H04L 29/08, H04L 12/24

(54) **Distributed computing unit, system and respective method**

(71) Applicant: ALCATEL LUCENT, 92100 Boulogne-Billancourt (FR)
(72) Inventor: Klotsche, Ralf, 70435 Stuttgart (DE)
(74) Representative: Therias, Philippe

(57) **Abstract**

The invention concerns a distributed computing unit (100), comprising a processor (102) adapted to detect that a first variable (I1) indicative of the usage of a first computing resource (101) exceeds a first threshold (T1), a sender (103) adapted to send a request for information about a second computing resource (121) to a second server (120) upon detecting that the first variable (I1) exceeds the first threshold (T1), a receiver (103) receiving information about the second computing resource (121) in a response to the request, wherein the processor (102) is adapted to detect that a second variable (12) indicative of the usage of the second computing resource (121) exceeds a second threshold (T2), and wherein the sender (103) is adapted to send a request for activation of a new computing resource upon detecting that both exceed the respective threshold (T1,T2), wherein the request for information about the second computing resource (121) is sent with a predetermined delay

The invention concerns a system of distributed computing units (100) and a respective method as well.

## Description

### Field of the invention

The invention relates to a distributed computing unit, system and respective method.

### Background

Distributed computing systems comprise of a plurality of distributed computing units, e.g. servers, providing computing resources depending on the demand. Individual distributed computing units are deployed for example automatically or manually if some preconditions regarding the load of the system or demand are fulfilled, e.g. when a user submits a request to process a computing task to a provider of a distributed computing system. Daytime load profiles may be used to improve the automation of the deployment depending on usage pattern stored as daytime load profiles, e.g. to keep a predetermined quantity of distributed computing units ready depending on the daytime load profile.

Up to a certain point, current automation processes can this way handle volatile usage pattern.

The faster the load in a distributed computing system changes and the more the actual load differs from the used daytime load profile, the more load oscillation may occur in the distributed computing system. This may lead to an instable performance of individual distributed computing units or the entire system.

### Summary

The object of the invention is thus to provide a highly reliable and robust automated resource control adapted to cope with highly volatile usage pattern.

The main idea of the invention is a method for a distributed computing unit of a distributed computing system, comprising detecting that a load indicator of a distributed computing system exceeds a first threshold, and sending a request for activation of a new computing resource upon detecting that the load indicator exceeds the first threshold, wherein the request for activation of the new computing resource is sent with a predetermined delay after the detection.

Advantageously the delay is determined depending on a predetermined characteristic time, e.g. boot time, propagation delay, scan-time or scan-time-pause, of the new computing resource.

Advantageously the delay is a predetermined positive multiple of the characteristic time.

Advantageously the delay is a predetermined positive fraction of the characteristic time.

Advantageously a request for information about the load of at least a second computing resource is sent.

Advantageously information about the load of at least a second computing resource is received, and the load indicator is determined depending on the received information.

Advantageously the load indicator is determined depending on information about the load of the first computing resource and the at least a second computing resource, in particular as average load in the distributed computing system.

The invention also relates to a distributed computing unit for a distributed computing system, e.g. a server, and a distributed computing system of a plurality of such units or servers.

Further developments of the invention can be gathered from dependent claims and the following description.

### Brief description of the figures

In the following the invention will be explained further making reference to the attached drawings.
Fig. 1 schematically shows a part of a distributed computing system.
Fig. 2 schematically shows a sequence diagram, showing some typical sequences within an automated collaborative resource control.
Fig. 3 schematically shows part of a distributed computing unit.

### Description of the embodiments

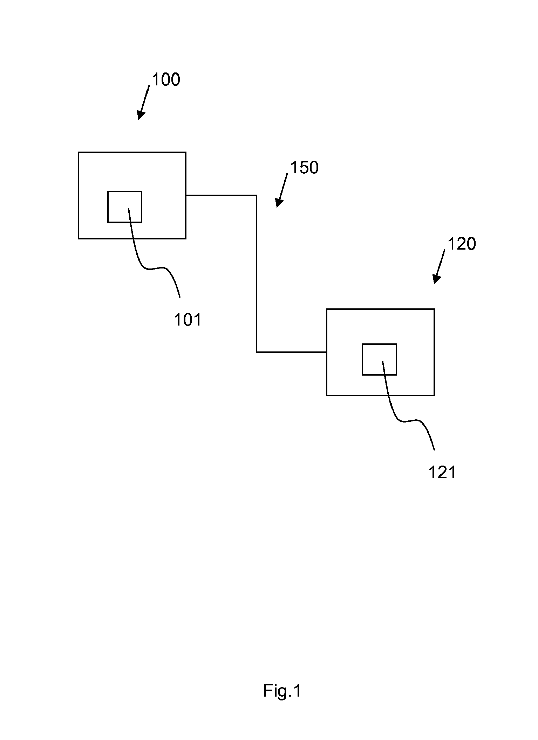

Fig. 1 schematically shows a part of a distributed computing system comprising a first distributed computing unit 100 for a distributed computing system and a second distributed computing unit 120 for such system. The network may comprise a plurality of distributed computing units 100, 120. Such plurality may be considered a swarm of servers that forms a media cloud or data center.

For example one of the servers comprises a SIP Gateway and the other servers comprise of various elements of an IP Multimedia Subsystem well known as IMS architecture. While some of the components, like the SIP Gateway, may be configured to be switched always on, except for maintenance, others may be activated or deactivated on by use basis, like additional routers that are used only in case of high demand and are switched off in case of little demand.

Physical components, e.g. CPU or I/O devices, may be switched on or off to scale the size of the distributed computing system and hence handle more load.

Likewise, components like virtual machines of a data center or media cloud may be switched on or off hence scaling the size of the cloud according to the need.

Such components are referred to as computing resources below. The servers using those resources may be adapted to turn such computing resources on or off depending on control commands. Such control commands are known to the person skilled in the art and not explained here in detail. Requesting a new computing resource to activate hence implies to send the corresponding control commands, e.g. according to the underlying operating system. For example Xen virtualization may be used.

The network is adapted to connect the distributed computing units 100, 120. In the depicted part, the first distributed computing unit 100 is connected to the second distributed computing unit 120 via a data link 150.

The connection is for example via local area network (LAN), wireless local area network (WLAN, 802.11n) or wide area network (WAN). Said connection is for example according to the well known internet protocol (IP), user datagram protocol (UDP), transmission control protocol (TCP) or stream control transmission protocol (SCTP). Signaling is for example according to the well known Simple Object Access Protocol (SOAP), Representational State Transfer (REST) or session initiation protocol (SIP) or Internet Protocol Multimedia Subsystem (IMS). Addressing may be done using the well known uniform resource locators (URL), uniform resource identifiers

(URI), names or namespaces of extensible markup language (XML Version 1.0, Third Edition, W3C Recommendation 8 December 2009).

The connection can but must not be directly between the devices. The typical use is on wide area networks with multiple intermediate devices where only the first distributed computing unit 100 and second distributed computing unit 120 are depicted in figure 1.

The first distributed computing unit 100 comprises a first computing resource 101; the second distributed computing unit 120 comprises a second computing resource 121.

The first computing resource 101 or the second computing resource 121 is for example a physical element of the server, like an I/O card, a CPU or the like. Likewise the respective computing resources may be elements of a virtual machine corresponding to for example I/O cards or CPUs

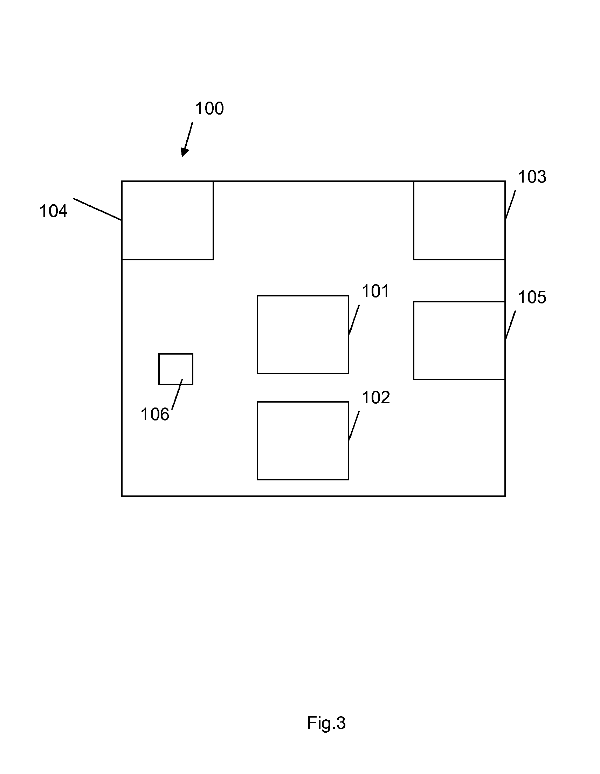

Fig. 3 schematically shows the first distributed computing unit 100. The first distributed computing unit 100 is adapted to provide all or parts of the functionality described below. The second distributed computing unit 120 comprises in the example identical components as the first distributed computing unit 100. Either distributed computing unit may comprise only parts of the described components as well as alternative or additional components.

The components comprise:

The first computing resource 101 and a random number generator 106.

An optional storage 105 adapted to store at least temporarily a first threshold T1 and a second threshold T2.

An optional interface, not depicted, adapted to modify the respective thresholds T1, T2. The interface is for example implemented as SOAP interface.

A processor 102 adapted to determine information about the first computing resource 101, in particular load statistic data such as CPU load or I/O load and the like. In the example this is a first variable indicative of the load of the first computing resource 101, e.g. indicating the load in percent, e.g. normalized to maximum load, e.g. 100%.

The processor 102 is further adapted to determine a load indicator, e.g. an average load of the distributed computing system depending on the first variable, in particular load statistic data indicative of the usage of the first computing resource 101, and information about the load of at least a second computing resource 121. The information about the load of the at least one second computing resource 121 is for example a second variable indicative of the load of the second computing resource 121. The second variable indicates the load in percent, e.g. normalized to maximum load, e.g. 100%. Load of a computing resource is measured for example by built in functions of an operating system and not further explained here.

The processor 102 may further be adapted to detect when the load indicator, e.g. the average, falls below the second threshold T2.

In this case the processor 102 may be adapted to deactivate the first computing resource 101 upon detecting that the load indicator, e.g. the average load, falls below the second threshold T2.

Furthermore the processor 102 may be adapted to determine the threshold T1, T2 for example as a load threshold normalized to 100% load of the distributed computing system.

The first threshold T1 for example indicates an upper load threshold for requesting additional resource, e.g. 95%.

The second threshold T2 for example indicates a lower load threshold for triggering shutdown of the first computing resource 101, e.g. 25%.

In the example the first threshold T1 is determined to be in the range between 95%, and the maximum, e.g. 100%.

In the example the second threshold T2 is determined to be in the range between 25% and the minimum, e.g. 0%.

The thresholds T1, T2 may be random values from the random number generator 106 or a combination of a predetermined fixed value and random offset.

Furthermore the components comprise a sender 103 adapted to send a request for information about the second computing resource 121 to the second distributed computing unit 120 comprising the second computing resource 121. In the example the address of at least one second server 120 is determined. The address is in the example determined from a list comprising IP addresses of at least one second server 120. The list is for example stored in storage 105 by an administrator.

Advantageously the sender 103 is adapted to select the second distributed computing unit 120 from a plurality of, in particular interconnected distributed computing units, in the example from the list, depending on a predetermined criterion. The criterion is for example defining a subset of servers depending on the network topology. To that end for example distance between distributed computing units, round trip delay time between distributed computing units, number of nodes between distributed computing units are used. The criterion in that case is for example that the distance, the round trip delay time or the number of nodes is below a respective threshold.

This way a region is defined within the network topology. The list is for example dynamically created and updated automatically according to the well known Neighbor Discovery Protocol. The list may be static and programmed by an administrator via the interface as well.

Furthermore the sender 103 is adapted to send a request for activation of a new computing resource upon detecting that the load indicator, e.g. the average load, exceeds the first threshold T1.

The addresses used to communicate are available at the first distributed computing unit 100, e.g. via a list of additional resources, e.g. a list of IP addresses for additional resources. The list is for example stored in the storage 105 by the administrator or automatically updated via an appropriate process using the interface described above for the list of addresses of second servers 121.

In a preferred embodiment the list comprises the address of a master controller, e.g. controlling the distributed computing system. In this case only one address may be stored and the master controller manages a repository of additional new computing resources.

Alternatively or additionally the list comprises the address of at least one second server 120 adapted to respond to a request for a new computing resource directly. This way the list on the first distributed computing unit 100 is the repository of new computing resources.

Furthermore the components comprise a receiver 104 adapted to receive the information about the second computing resource 121, in particular load statistic data of the second computing resource 121, e.g. I/O or CPU load in percent of maximum load, in a response to the request. This information is for example aforementioned second variable.

By using random values for each case an individual first and second threshold is easily determined for each distributed computing unit 100, 120 of the distributed computing system. In the distributed computing system this leads to different response times for different servers, because thresholds vary randomly in the swarm of multiple servers of the media cloud or data center.

While individual distributed computing units 100, 120 can effectively operate as two point controllers, this causes the swarm of servers to operate similar to a PID controller regarding the control of the overall resource and load of the media cloud or data center.

However to improve the control of such distributed computing units 100, 120, the sender 103 is adapted to send the request for activation with a predetermined delay.

The sender 103 is adapted to determine the delay, for example depending on a predetermined boot up characteristic time, e.g. boot time, propagation delay, scan-time or scan-time-pause, of the new computing resource. In this context scan-time is the time to contact all computing resources in a region and to get their answers. Furthermore scan-time-pause is the pause time between two such scans to avoid a flooding of the (IP) network with control messages containing statistics' data. This information is for example stored in storage 105 as a constant time, e.g. 2 minutes.

Preferably the delay is a predetermined positive multiple or predetermined positive fraction of the characteristic time. This way the delay is adapted for and to individual computing resources.

The delay may be determined from the stored constant time, e.g. by multiplication with a predetermined factor. The predetermined factor may be a random number from the random number generator 106, e.g. between 0 and 10. Any other borders may be chosen for the random number as well.

In order to provide the same functionality within the distributed computing system, e.g. the swarm of servers, the individual distributed computing units may comprise of components to send requests for actual load statistic data, e.g. values of CPU or I/O load, and to trigger either their own shutdown or to request activation of an additional resource.

In this case the receiver 104 may be adapted to receive the request for information about the load of the first computing resource 101 the processor 102 is adapted to determine the requested information as describe above and the sender 103 is adapted to send the requested information about the first computing resource 101 in a response, e.g. using aforementioned second variable.

As described above, requests for activation of a new computing resource may be sent directly to distributed computing units of the distributed computing system, e.g. swarm, media cloud or data center that are idle, or via a master controller having information about the distributed computing system, e.g. swarm, media cloud or data center. According to an example then either the corresponding distributed computing unit receiving the request directly starts an additional physical component, e.g. via wake on LAN, or a virtual component via a virtual machine, or the master controller triggers the start of an additional physical component or a virtual component of a virtual machine upon receipt of the request.

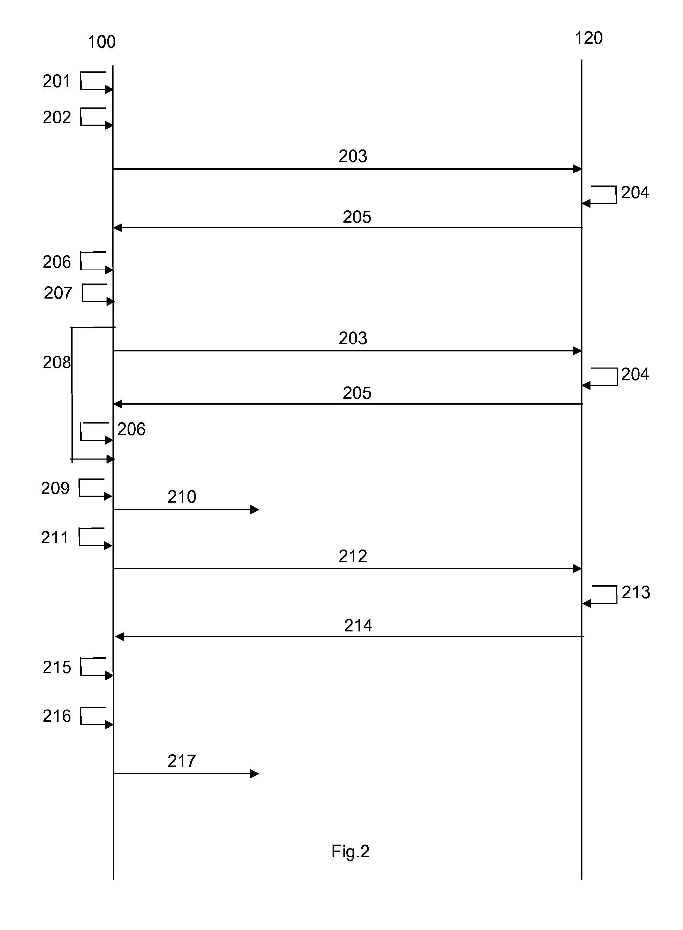

Fig. 2 schematically shows a sequence diagram, showing some typical sequences within an automated collaborative resource control.

The control for example starts whenever the first distributed computing unit 100 is started. The sequences are for example repeated every second. The order of sequences may vary or some sequences are repeated less or more frequently than other.

In the example below the first distributed computing unit 100 and the second distributed computing unit 120 are described. Typically in the distributed computing system a plurality of distributed computing units, e.g. a swarm of servers, is used in the media cloud or data center. In that case the sequences described below or similar sequences are used between the servers belonging to the swarm, media cloud or data center. This means that each of the distributed computing units, e.g. servers of the swarm, media cloud or data center is communicating with a plurality of other distributed computing units. That way an automated collaborative resource control robust versus highly volatile usage pattern is achieved. The example uses resource load as control variable. Any other type of resource characteristic such as idle time or memory usage may be used as well. In that case corresponding components of the units are adapted to process such data.

In the example the computing resources 101, 121 are considered to be physical central processing units (CPU) and hence the information about them is the CPU load in percent of their maximum available load (100%).

In the sequence, in a step 201 the first threshold T1 and the second threshold T2 is determined. As described above in the example the first threshold T1 is determined as value between 95% and maximum load (100%) and the second threshold T2 as value between 25% and minimum load (0%). In the example the load refers to the average CPU load of the distributed computing system. This step may be performed frequently, e.g. every second or only once after the first distributed computing unit 100 starts. Optionally the resulting thresholds T1, T2 may be stored at least temporarily on the storage 105. In that case step 201 may comprise of reading the thresholds T1, T2 from storage 105 after calculating them once.

Afterwards in a step 202, the first variable, indicative of the load of the first computing resource 101 of the first distributed computing unit 100 is determined. According to the example the CPU load of the CPU of the first distributed computing unit 100 is determined.

Afterwards the request for information about the load of the second computing resource 121 is sent in a message 203 to the second distributed computing unit 120. To that end the second distributed computing unit 120 is selected from the plurality of, in particular interconnected, distributed computing units depending on the predetermined criterion defining the subset of distributed computing units depending on the network topology. As described above in particular distance, round trip delay time, number of nodes between the first distributed computing unit 100 and the second distributed computing unit 120 are used to determine which distributed computing unit to send message 203 to.

Preferably the message 203 is sent to a plurality of second distributed computing units 120, e.g. in order that their respective addresses are stored in aforementioned list of IP addresses. In an example where the addresses of the second servers 120 are stored in the list in the order of their distance to the first server 100 in terms of round trip delay time, message 203 is sent to the 70 second servers 120 closest to the first server 100 in terms of round trip delay time by sending them to the first 70 second servers 120. This information is determined as describe above in the example from the list of IP addresses sorted according to round trip delay times.

Upon receipt of the message 203, i.e. the request for information about the second computing resource 121, the requested information is determined, e.g. as aforementioned second variable. This is in the example processed on the second distributed computing unit 120.

To that end in a step 204 the information about the second computing resource 121, in particular the load statistic data, is determined. According to the example the CPU load of the CPU of the second server 120 is determined as described above as percentage value of the maximum of the CPU of the second computing resource 121 in the second variable.

Afterwards the requested information about the load of the second computing resource 121 is sent in a response 205. In the example the response comprises the second variable.

Upon receipt of response 205, i.e. the information about the load of the second computing resource 121 in response to the request 203, the load indicator, e.g. the average load, of the distributed computing system is determined in a step 206 depending on information about the load of the first computing resource 101 and information about the load of at least the second computing resource 121. The average is used as load indicator in the example and determined as arithmetic mean of the individual CPU load values. In the example of the first distributed computing unit 100 and one second distributed computing unit 120, the average of the first variable and the second variable may be used. Alternatively other mean values such as median or moving average may be used as well.

Afterwards a test is performed in a step 207 to detect when the load indicator, e.g. the average load, exceeds the predetermined first threshold T1. Upon detection that the load indicator exceeds the predetermined first threshold T1, a timer is reset, e.g. to 0 and started. In case the load indicator doesn't exceed the first threshold T1, the sequence ends or continues e.g. repeating steps 203 to 207.

Otherwise the timer is monitored in a step 208 until the predetermined delay time is reached. In the meantime steps 203 to 206 may be repeated as well. In the example at least one message 203 is sent to a plurality of second distributed computing units 120 in order to update the information about the load and to determine whether another of the distributed computing units 120 already responded to reduce the load on the distributed computing system.

After the delay time has passed, in a step 209 a test is performed to detect when the load indicator exceeds the first threshold T1 still after the delay time.

In case the load indicator exceeds the first threshold T1 a request for activation of a new computing resource is sent in a message 210.

In the example this indicates that the load strain on the distributed computing system has not been addressed yet, e.g. by another distributed computing unit requesting a new computing resource.

Preferably, when as described above the request message 203 is sent to a plurality of second servers 120, step 206 comprises of waiting for the response of a predetermined amount of second distributed computing units 120 and determining whether to request the activation of a new computing resource in message 210 depending on a plurality of responses. For example when from the aforementioned 70 requests 50 responses have been received, the load indicator, e.g. the average load, is compared to the first threshold T1 and when applicable the new computing resource is requested, i.e. the message 210 is sent.

In this case more second distributed computing units 120 respond and their respective second variables are determined, transmitted and used for determining the load indicator, e.g. average.

The message 210 preferably is sent only to one specific second distributed computing unit 120 or the master controller. This is to avoid oscillation in the system.

This way the distributed computing unit 100 responds only with a request for activation of a new computing resource, if no other distributed computing unit 100, 120 successfully sent such request already or the load is still too high after the delay time. This way oscillation is mitigated.

Message 210 is sent in the example as described above using the list of IP addresses. Message 210 is sent in the example to a corresponding server or the master controller. In the first case, the IP addresses are mapped in the list to information indicating the priority of the respective servers, e.g. from the order in the list. This means that a server at the beginning of the list is the first candidate to request the activation of the new computing resource. In the latter case the master controller tracks such information.

Optionally or alternatively the components and the sequence may be adapted as described below.

The first distributed computing unit 100 may be adapted to detect in a step 211 when the load indicator, e.g. the average load, falls below the second threshold T2. This indicates that the distributed computing system is not optimally used and the first server 100 may be a candidate to deactivate.

Upon detection that the load indicator, e.g. the average load, falls below the second threshold T2, a message 212, requesting information about the second computing resource 121, is sent to the second distributed computing unit 120.

Preferably the message 212 is sent to a plurality, e.g. 70 second distributed computing units 120.

Upon receipt of message 212 in a step 213, the load of the second computing resource 121, in the example the CPU load of the second distributed computing unit 120 is determined. In the example aforementioned second variable is determined.

Afterwards the requested information about the second computing resource 121 is sent in a message 214, response, from the second distributed computing unit 120 to the first distributed computing unit 100. In the example aforementioned second variable is sent.

Upon receipt of message 214 the load indicator is determined in a step 215 as described above.

Afterwards a test is performed in a step 216 to determine when the load indicator, e.g. the average load, falls below the second threshold T2. This indicates that the distributed computing resource is still not optimally used.

Upon detection of this case, the first computing resource 101 is triggered to shut down. The shutdown may be immediately or following a delay, e.g. a graceful shutdown waiting for all running processes to stop but not accepting new process requests. In case the computing resource in question is used for a process that may not be shut down, shutdown may be prohibited in this step either. Optionally in a message 217 the second servers or the master controller is informed about this shut down.

Preferably, when as described above the request message 210 is sent to a plurality of second distributed computing units 120, step 215 comprises of waiting for the response of a predetermined amount of second distributed computing units 120 and determining whether to shut down the first computing resource 101 or not depending on several of the responses. The average is then determined for example when a predetermined amount of second distributed computing units 120, e.g. 25 out of 70 requests sent, reported that their load, e.g. in the second variable.

The processing of the second variable may be performed on the second distributed computing unit 120 as well, when the information about the first threshold T1 or the second threshold T2 is transmitted in the request. In that case the individual load of a second distributed computing unit 120 is compared to the first threshold T1 or the second threshold T2 of the requesting first distributed computing unit 100. In the first distributed computing unit 100 this replaces the steps of determining the load indicator and comparing it to the first threshold T1 or the second threshold T2 with a test to determine if a predetermined amount of second distributed computing units 120 report to exceed the first threshold T1 or to fall below the second threshold T2. To that end the second distributed computing units 120 respond with a TRUE or FALSE indication of whether the first threshold T1 is exceeded or not or whether the load indicator fell below the second threshold T2 or not.

In an example, in case that 50 of 70 second servers 121 exceed the first threshold T1, the message 210 is sent to request a new resource. In another example in case 50 of 70 second servers 121 are below the second threshold T2, the first server is shut down.

In an optional step the first distributed computing unit 100 or the second distributed computing unit 120 may receive a request to modify the respective thresholds T1, T2 and send a message to prompt via an interface for user input as describe above. In that case in an additional step the values may be stored on the respective distributed computing unit 100, 120.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for a unit (100) of a distributed computing system, **comprising** detecting that a load indicator of a distributed computing system exceeds a first threshold (T1), and sending a request for activation of a new computing resource upon detecting that the load indicator exceeds the first threshold (T1), wherein the request for activation of the new computing resource is sent with a predetermined delay after the detection.

2. The method according to claim 1, wherein the delay is determined depending on a predetermined characteristic time, e.g. boot time, propagation delay, scan-time or scan-time-pause, of the new computing resource.

3. The method according to claim 2, wherein the delay is a predetermined positive multiple of the characteristic time.

4. The method according to claim 2, wherein the delay is a predetermined positive fraction of the characteristic time.

5. The method according to claims 1 to 4, comprising sending a request for information about the load of at least a second computing resource (121).

6. The method according to claims 1 to 5, comprising receiving information about the load of at least a second computing resource (121), and determining the load indicator depending on the received information.

7. The method according to claims 5 or 6, comprising determining the load indicator depending on information about the load of the first computing resource (101) and the load of at least a second computing resource (121), in particular as average load in the distributed computing system.

8. A unit (100) for a distributed computing system, **comprising** a processor (102) adapted to detect that a load indicator of a distributed computing system exceeds a first threshold (T1), a sender (103) adapted to send a request for activation of a new computing resource upon detecting that the load indicator exceeds the first threshold (T1), wherein the request for activation of the new computing resource is sent with a predetermined delay after the detection.

9. The unit (100) according to claim 8, wherein the delay is determined depending on a predetermined characteristic time, e.g. boot time, propagation delay, scan-time or scan-time-pause, of the new computing resource.

10. The unit (100) according to claim 8, wherein the delay is a predetermined positive multiple of the characteristic time.

11. The unit (100) according to claim 8, wherein the delay is a predetermined positive fraction of the characteristic time.

12. The unit (100) according to claim 8 to 11, wherein the sender (103) is adapted to send a request for information about the load of at least a second computing resource (121).

13. The unit (100) according to claim 8 to 12, comprising a receiver (104) adapted to receive information about the load of at least a second computing resource (121), wherein the processor (102) is adapted to determine the load indicator depending on the received information.

14. The unit (100) according to claims 12 or 13, comprising determining the load indicator depending on information about the load of the first computing resource (101) and the load of at least a second computing resource (121), in particular as average load in the distributed computing system.

15. A system comprising a plurality of distributed computing units (100) according to any of claims 8 to 10

## Amended claims

### Amended claims in accordance with Rule 137(2) EPC.

1. A method for a unit (100) of a distributed computing system, comprising detecting that a load indicator of a distributed computing system exceeds a first threshold (T1), and sending a request for activation of a new computing resource upon detecting that the load indicator exceeds the first threshold (T1) after a predetermined delay, wherein the request for activation of the new computing resource is sent with the predetermined delay after the detection,
**characterized in that** the delay is determined depending on a predetermined characteristic timeof the new computing resource.

2. The method according to claim 1, wherein the delay is a predetermined positive multiple of the characteristic time.

3. The method according to claim 1, wherein the delay is a predetermined positive fraction of the characteristic time.

4. The method according to claims 1 to 3, comprising sending a request for information about the load of at least a computing resource (121).

5. The method according to claims 1 to 4, comprising receiving information about the load of at least a computing resource (121), and determining the load indicator depending on the received information.

6. The method according to claims 4 or 5, comprising determining the load indicator depending on information about the load of a first computing resource (101) and the load of at least a second computing resource (121), in particular as average load in the distributed computing system.

7. A unit (100) for a distributed computing system, comprising a processor (102) adapted to detect that a load indicator of a distributed computing system exceeds a first threshold (T1), a sender (103) adapted to send a request for activation of a new computing resource upon detecting that the load indicator exceeds the first threshold (T1) after a predetermined delay, wherein the request for activation of the new computing resource is sent with the predetermined delay after the detection,
**characterized in that** the delay is determined depending on a predetermined characteristic time.

8. The unit (100) according to claim 7, wherein the delay is a predetermined positive multiple of the characteristic time.

9. The unit (100) according to claim 7, wherein the delay is a predetermined positive fraction of the characteristic time.

10. The unit (100) according to claim 7 to 9, wherein the sender (103) is adapted to send a request for information about the load of at least a computing resource (121).

11. The unit (100) according to claim 7 to 10, comprising a receiver (104) adapted to receive information about the load of at least a computing resource (121), wherein the processor (102) is adapted to determine the load indicator depending on the received information.

12. The unit (100) according to claims 10 or 11, comprising determining the load indicator depending on information about the load of a first computing resource (101) and the load of at least a second computing resource (121), in particular as average load in the distributed computing system.

13. A system comprising a plurality of units (100) of a distributed computing system according to any of claims 7 to 8
